(19) Europäisches Patentamt / European Patent Office / Office européen des brevets

(11) **EP 4 131 621 A1**

(12) **EUROPEAN PATENT APPLICATION**
published in accordance with Art. 153(4) EPC

(43) Date of publication:
08.02.2023 Bulletin 2023/06

(51) International Patent Classification (IPC):
**H01M 50/449** (2021.01)    **H01M 50/443** (2021.01)

(21) Application number: 21778789.4

(52) Cooperative Patent Classification (CPC):
**H01M 50/443; H01M 50/449;** Y02E 60/10;
Y02P 70/50

(22) Date of filing: 22.03.2021

(86) International application number:
**PCT/JP2021/011769**

(87) International publication number:
**WO 2021/200346 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 31.03.2020 JP 2020063335

(71) Applicant: **Zeon Corporation**
**Tokyo 100-8246 (JP)**

(72) Inventor: **MARUHASHI Yutaka**
**Tokyo 100-8246 (JP)**

(74) Representative: **Maiwald GmbH**
**Elisenhof**
**Elisenstraße 3**
**80335 München (DE)**

(54) **ORGANIC PARTICLE DISPERSION FOR SECONDARY CELL FUNCTIONAL LAYER, COMPOSITION FOR SECONDARY CELL FUNCTIONAL LAYER, CELL MEMBER FOR SECONDARY CELL, AND SECONDARY CELL**

(57)    An organic particle dispersion liquid for a secondary battery functional layer contains a solvent and organic particles including a polyfunctional monomer unit in a proportion of 50 mass% or more. In this organic particle dispersion liquid, the polymerization initiator decomposition product content is 50 ppm or less, and the total polymerization initiator decomposition product and unreacted polyfunctional monomer content is 500 ppm or less.

EP 4 131 621 A1

## Description

TECHNICAL FIELD

The present disclosure relates to an organic particle dispersion liquid for a secondary battery functional layer, a composition for a secondary battery functional layer, a battery member for a secondary battery, and a secondary battery.

BACKGROUND

Secondary batteries such as lithium ion secondary batteries have characteristics such as compact size, light weight, high energy density, and the ability to be repeatedly charged and discharged, and are used in a wide variety of applications.

A secondary battery generally includes battery members such as electrodes (positive electrode and negative electrode) and a separator that isolates the positive electrode and the negative electrode from each other and prevents short-circuiting between the positive and negative electrodes. There are cases in which a porous membrane layer for improving heat resistance and strength, an adhesive layer aimed at improving adhesiveness between battery members, or the like (hereinafter, such layers are also referred to collectively using the term "functional layer") is provided at the surface of an electrode and/or a separator. More specifically, an electrode that is obtained by further forming a functional layer on an electrode substrate that includes an electrode mixed material layer on a current collector or a separator that is obtained by forming a functional layer on a separator substrate may be used as a battery member.

Attempts have been made to improve functional layers with the aim of achieving even higher secondary battery performance. As one example, Patent Literature (PTL) 1 discloses a composition for a non-aqueous secondary battery functional layer containing a solvent and organic particles that include a polyfunctional ethylenically unsaturated monomer unit in a proportion of not less than 55 mass% and not more than 90 mass% and that have a volume-average particle diameter of not less than 50 nm and not more than 370 nm. Through the composition for a functional layer according to PTL 1, it is possible to form a functional layer that has excellent heat shrinkage resistance and that can cause a non-aqueous secondary battery to display excellent cycle characteristics. As another example, PTL 2 discloses the formation of a porous membrane for a secondary battery using non-conductive particles that have a prescribed specific surface area and that include a (meth)acrylic polyfunctional monomer unit in a proportion of 50 mass% or more. As another example, PTL 3 discloses a composition for producing a protective film for an electrical storage device that is a composition containing polymer particles (A1), polymer particles (A2), and a liquid medium, and in which the content of a repeating unit derived from a compound that includes at least two polymerizable unsaturated groups among 100 parts by mass of the polymer particles (A2) is not less than 20 parts by mass and not more than 100 parts by mass. As another example, PTL 4 discloses a composition for producing a protective film for an electrical storage device that is a composition containing: polymer particles (A) including polymer particles (A2) in which the proportional content of a repeating unit derived from a compound including at least two polymerizable unsaturated groups is not less than 20 mass% and not more than 100 mass%; a metal complex salt (B); and a liquid medium (C).

CITATION LIST

Patent Literature

PTL 1: WO2019/065416A1
PTL 2: JP6052174B2
PTL 3: JP5488857B1
PTL 4: JP2016-219358A

SUMMARY

(Technical Problem)

In recent years, there has been demand for even higher secondary battery performance and capacity. On the other hand, secondary batteries are known to experience loss of capacity during initial charging and discharging. Therefore, there is demand for reducing this loss and increasing initial coulombic efficiency of secondary batteries in order to achieve higher capacity. Moreover, in the case of a secondary battery in which a battery member that includes a functional layer is used, there is demand for sufficiently inhibiting heat shrinkage (i.e., increasing heat shrinkage resistance) of the functional layer so as to inhibit the occurrence of short-circuiting of a positive electrode and a negative electrode in a high-temperature environment and even further increase secondary battery stability.

Accordingly, one object of the present disclosure is to provide an organic particle dispersion liquid for a secondary battery functional layer and a composition for a secondary battery functional layer containing the same with which it is possible to form a functional layer that has excellent heat shrinkage resistance and can cause a secondary battery to display excellent initial coulombic efficiency.

Another object of the present disclosure is to provide a battery member for a secondary battery including a functional layer that has excellent heat shrinkage resistance and can cause a secondary battery to display excellent initial coulombic efficiency.

Yet another object of the present disclosure is to provide a secondary battery that has excellent stability and initial coulombic efficiency.

(Solution to Problem)

The inventor conducted diligent investigation with the aim of solving the problem set forth above. The inventor made a new discovery that by using a dispersion liquid obtained by dispersing, in a solvent, organic particles that include a polyfunctional monomer unit in a proportion of 50 mass% or more and in which the polymerization initiator decomposition product content and the total polymerization initiator decomposition product and unreacted polyfunctional monomer content are not more than specific upper limits, it is possible to form a functional layer that has excellent heat shrinkage resistance and that can cause a secondary battery to display excellent initial coulombic efficiency, and, in this manner, the inventor completed the present disclosure.

Specifically, the present disclosure aims to advantageously solve the problems set forth above, and a presently disclosed organic particle dispersion liquid for a secondary battery functional layer comprises organic particles and a solvent, wherein the organic particles include a polyfunctional monomer unit in a proportion of 50 mass% or more, polymerization initiator decomposition product content in the organic particle dispersion liquid for a secondary battery functional layer is 50 ppm or less, and total polymerization initiator decomposition product and unreacted polyfunctional monomer content in the organic particle dispersion liquid for a secondary battery functional layer is 500 ppm or less. By using an organic particle dispersion liquid in which a polyfunctional monomer unit is included in a proportion of 50 mass% or more, in which the polymerization initiator decomposition product content is 50 ppm or less, and in which the total polymerization initiator decomposition product and unreacted polyfunctional monomer content is 500 ppm or less in this manner, it is possible to form a functional layer having excellent heat shrinkage resistance. Moreover, by using a battery member that includes this functional layer, it is possible to cause a secondary battery to display excellent initial coulombic efficiency.

Note that the "polymerization initiator decomposition product content" and the "total polymerization initiator decomposition product and unreacted polyfunctional monomer content" in the organic particle dispersion liquid for a secondary battery functional layer are the contents of these substances as proportions (ppm) based on the total mass of the organic particle dispersion liquid for a secondary battery functional layer and can be measured by a method described in the EXAMPLES section of the present specification.

Moreover, when a component formed of a polymer, such as organic particles, is said to "include a monomer unit" in the present specification, this means that "a polymer obtained using that monomer includes a repeating unit derived from the monomer". Furthermore, in the present specification, for a polymer that is produced through copolymerization of a plurality of types of monomers, the "proportional content of a monomer unit" that is formed through polymerization of a given monomer is normally, unless otherwise specified, the same as the ratio (charging ratio) of the given monomer among all monomers used in polymerization of the polymer. Also, the "proportional content" of each "monomer unit" in a polymer can be measured by a nuclear magnetic resonance (NMR) method such as $^1$H-NMR or $^{13}$C-NMR.

In the presently disclosed organic particle dispersion liquid for a secondary battery functional layer, the organic particles preferably have a volume-average particle diameter of not less than 50 nm and not more than 900 nm. When the volume-average particle diameter of the organic particles is within the range set forth above, heat shrinkage resistance of an obtained functional layer and initial coulombic efficiency of an obtained secondary battery can be further increased.

Note that the "volume-average particle diameter" of organic particles can be measured by a method described in the EXAMPLES section.

Moreover, the present disclosure aims to advantageously solve the problems set forth above, and a presently disclosed composition for a secondary battery functional layer comprises: a binder; and any one of the organic particle dispersion liquids for a secondary battery functional layer set forth above. By using this composition for a secondary battery functional layer, it is possible to form a functional layer having excellent heat shrinkage resistance. Moreover, by using a battery member that includes this functional layer, it is possible to cause a secondary battery to display excellent initial coulombic efficiency.

Furthermore, the present disclosure aims to advantageously solve the problems set forth above, and a presently disclosed battery member for a secondary battery comprises a functional layer for a secondary battery formed using the composition for a secondary battery functional layer set forth above. A battery member that includes a functional layer formed using the composition for a functional layer set forth above in this manner has excellent heat shrinkage resistance and can cause a secondary battery including the battery member to display excellent initial coulombic efficiency.

Moreover, by using the presently disclosed battery member for a secondary battery, it is possible to obtain a secondary battery having excellent stability and initial coulombic efficiency.

(Advantageous Effect)

According to the present disclosure, it is possible to provide an organic particle dispersion liquid for a secondary battery functional layer and a composition for a secondary battery functional layer containing the same with which it is possible to form a functional layer that has excellent heat shrinkage resistance and can cause a secondary battery to display excellent initial coulombic efficiency.

Moreover, according to the present disclosure, it is possible to provide a battery member for a secondary battery that has excellent heat shrinkage resistance and can cause a secondary battery to display excellent initial coulombic efficiency.

Furthermore, according to the present disclosure, it is possible to provide a secondary battery that has excellent stability and initial coulombic efficiency.

DETAILED DESCRIPTION

The following provides a detailed description of embodiments of the present disclosure.

The presently disclosed organic particle dispersion liquid for a secondary battery functional layer and composition for a secondary battery functional layer containing the same may be used in formation of a functional layer for a secondary battery. Moreover, the presently disclosed battery member for a secondary battery includes this functional layer for a secondary battery. More specifically, the presently disclosed battery member for a secondary battery may be a separator or electrode that includes a functional layer for a secondary battery formed using the presently disclosed organic particle dispersion liquid for a secondary battery functional layer or composition for a secondary battery functional layer containing the same. Furthermore, the presently disclosed secondary battery includes at least the presently disclosed battery member for a secondary battery.

(Organic particle dispersion liquid for secondary battery functional layer)

The presently disclosed organic particle dispersion liquid contains organic particles and a solvent and may optionally contain other additives. The organic particles that are contained in the presently disclosed organic particle dispersion liquid include a polyfunctional monomer unit in a proportion of 50 mass% or more. Moreover, in the presently disclosed organic particle dispersion liquid, the polymerization initiator decomposition product content is 50 ppm or less and the total polymerization initiator decomposition product and unreacted polyfunctional monomer content is 500 ppm or less.

As a result of a polyfunctional monomer unit being included in a proportion of 50 mass% or more, the polymerization initiator decomposition product content being 50 ppm or less, and the total polymerization initiator decomposition product and unreacted polyfunctional monomer content being 500 ppm or less, the presently disclosed organic particle dispersion liquid can impart excellent heat shrinkage resistance to a functional layer formed using the organic particle dispersion liquid and can cause a secondary battery including a battery member that includes the functional layer to display excellent initial coulombic efficiency.

<Organic particles>

The organic particles are particles that are formed of a polymer and are a component that can mainly improve heat shrinkage resistance, strength, and the like of a functional layer.

«Chemical composition»

The organic particles include a polyfunctional monomer unit in a proportion of 50 mass% or more as previously described and can include repeating units other than the polyfunctional monomer unit (i.e., other repeating units) in a proportion of 50 mass% or less.

[Polyfunctional monomer unit]

Examples of polyfunctional monomers that can form the polyfunctional monomer unit referred to in the present disclosure include polyfunctional ethylenically unsaturated monomers. Monomers that include two or more ethylenically unsaturated bonds per molecule (excluding conjugated diene monomers such as 1,3-butadiene) can be used as polyfunctional ethylenically unsaturated monomers.

Examples of polyfunctional ethylenically unsaturated monomers that may be used include polyfunctional (meth)acrylic acid ester monomers such as allyl (meth)acrylate, ethylene glycol di(meth)acrylate, diethylene glycol di(meth)acrylate, triethylene glycol di(meth)acrylate, tetraethylene glycol di(meth)acrylate, and trimethylolpropane tri(meth)acrylate;

polyfunctional aromatic vinyl monomers such as divinylbenzene and diisopropenylbenzene; and
dipropylene glycol diallyl ether, polyglycol diallyl ether, triethylene glycol divinyl ether, hydroquinone diallyl ether, tetraallyloxyethane, trimethylolpropane diallyl ether, allyl and vinyl ethers of polyfunctional alcohols other than those already listed, triallylamine, and methylenebisacrylamide.

Note that in the present disclosure, "(meth)acrylate" is used to indicate "acrylate" and/or "methacrylate".

One of these polyfunctional ethylenically unsaturated monomers may be used individually, or two or more of these polyfunctional ethylenically unsaturated monomers may be used in combination. Of these polyfunctional ethylenically unsaturated monomers, polyfunctional (meth)acrylic acid ester monomers and polyfunctional aromatic vinyl monomers are preferable from a viewpoint of further improving heat shrinkage resistance of a functional layer, with polyfunctional (meth)acrylic acid ester monomers being more preferable, and ethylene glycol dimethacrylate and trimethylolpropane trimethacrylate being even more preferable.

The proportional content of the polyfunctional monomer unit in the organic particles when all repeating units of the polymer forming the organic particles are taken to be 100 mass% is required to be 50 mass% or more, is preferably 64 mass% or more, and more preferably 70 mass% or more, and is preferably 90 mass% or less, more preferably 85 mass% or less, and even more preferably 83 mass% or less. Through the proportion constituted by the polyfunctional monomer unit in the organic particles being 50 mass% or more, the degree of cross-linking of the organic particles can be sufficiently increased, and heat shrinkage resistance of a functional layer can be sufficiently ensured. On the other hand, through the proportion constituted by the polyfunctional monomer unit in the organic particles being 90 mass% or less, polymerization stability during production of the organic particles can be increased, and the formation of fine particles and the remaining presence of unreacted material can be inhibited. This makes it possible to enhance initial coulombic efficiency and cycle characteristics of a secondary battery.

[Other repeating units]

Examples of other repeating units that may be included in the organic particles include, but are not specifically limited to, a monofunctional (meth)acrylic acid ester monomer unit, a nitrile group-containing monomer unit, and an acidic group-containing monomer unit. Note that in the present disclosure, "(meth)acryl" is used to indicate "acryl" and/or "methacryl".

-Monofunctional (meth)acrylic acid ester monomer unit-

Examples of (meth)acrylic acid ester monomers that can form the monofunctional (meth)acrylic acid ester monomer unit include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate.

One of these (meth)acrylic acid ester monomers may be used individually, or two or more of these (meth)acrylic acid ester monomers may be used in combination. Of these (meth)acrylic acid ester monomers, methyl acrylate, ethyl acrylate, n-butyl acrylate, 2-ethylhexyl acrylate, methyl methacrylate, ethyl methacrylate, n-butyl methacrylate, and 2-ethylhexyl methacrylate are preferable, and n-butyl acrylate is more preferable.

The proportional content of the monofunctional (meth)acrylic acid ester monomer unit in the organic particles when all repeating units of the polymer forming the organic particles are taken to be 100 mass% is preferably 10 mass% or more, and more preferably 15 mass% or more, and is preferably 45 mass% or less, more preferably 35 mass% or less, and even more preferably 29 mass% or less. When the proportion constituted by the monofunctional (meth)acrylic acid ester monomer unit in the organic particles is 10 mass% or more, polymerization stability is ensured and formation of fine particles can be inhibited during production of the organic particles, and initial coulombic efficiency and cycle characteristics of a secondary battery can be improved. On the other hand, when the proportion constituted by the monofunctional (meth)acrylic acid ester monomer unit in the organic particles is 45 mass% or less, the degree of cross-linking of the organic particles is ensured, and heat resistance of a functional layer can be further improved. Moreover, cycle characteristics of a secondary battery can be further enhanced.

-Nitrile group-containing monomer unit-

Examples of nitrile group-containing monomers that can form the nitrile group-containing monomer unit include $\alpha,\beta$-ethylenically unsaturated nitrile monomers. Specifically, any $\alpha,\beta$-ethylenically unsaturated compound that has a nitrile group can be used as an $\alpha,\beta$-ethylenically unsaturated nitrile monomer without any specific limitations. Examples include acrylonitrile; $\alpha$-halogenoacrylonitriles such as $\alpha$-chloroacrylonitrile and $\alpha$-bromoacrylonitrile; and $\alpha$-alkylacrylo-nitriles such as methacrylonitrile and $\alpha$-ethylacrylonitrile. One of these nitrile group-containing monomers may be used individually, or two or more of these nitrile group-containing monomers may be used in combination. Of these nitrile group-containing monomers, acrylonitrile and methacrylonitrile are preferable.

The proportional content of the nitrile group-containing monomer unit in the organic particles when all repeating units of the polymer forming the organic particles are taken to be 100 mass% is preferably 0.1 mass% or more, more preferably 0.5 mass% or more, and even more preferably 1 mass% or more, and is preferably 10 mass% or less, and more preferably 5 mass% or less. When the proportion constituted by the nitrile group-containing monomer unit in the organic particles is not less than 0.1 mass% and not more than 10 mass%, polymerization stability is ensured and formation of fine particles can be inhibited during production of the organic particles, and cycle characteristics of a secondary battery can be improved.

-Acidic group-containing monomer unit-

Examples of acidic group-containing monomers that can form the acidic group-containing monomer unit include carboxy group-containing monomers, sulfo group-containing monomers, and phosphate group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, $\alpha$-acetoxyacrylic acid, $\beta$-trans-aryloxyacrylic acid, and $\alpha$-chloro-$\beta$-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxy group through hydrolysis can be used as a carboxy group-containing monomer.

Examples of sulfo group-containing monomers include styrene sulfonic acid, vinyl sulfonic acid (ethylene sulfonic acid), methyl vinyl sulfonic acid, (meth)allyl sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers include 2-(meth)acryl oyl oxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

One of the acidic group-containing monomers described above may be used individually, or two or more of the acidic group-containing monomers described above may be used in combination. Of these acidic group-containing monomers, carboxy group-containing monomers are preferable, and acrylic acid and methacrylic acid are more preferable.

The proportional content of the acidic group-containing monomer unit in the organic particles when all repeating units of the polymer forming the organic particles are taken to be 100 mass% is preferably 0.1 mass% or more, and more preferably 1 mass% or more, and is preferably 10 mass% or less, and more preferably 5 mass% or less. When the proportion constituted by the acidic group-containing monomer unit in the organic particles is 0.1 mass% or more, polymerization stability is ensured and formation of fine particles can be inhibited during production of the organic particles, and cycle characteristics of a secondary battery can be improved. On the other hand, when the acidic group-containing monomer unit constitutes 10 mass% or less in the organic particles, the amount of water that is imported into a secondary battery can be reduced, and cycle characteristics of a secondary battery can be enhanced.

<<Production method of organic particle dispersion liquid>>

An organic particle dispersion liquid that has organic particles that can satisfy various attributes set forth above dispersed in a solvent can be produced by performing polymerization of a monomer composition containing monomers such as described above in a solvent such as water, for example, in the presence of a polymerization initiator and a reductant. In other words, the presently disclosed organic particle dispersion liquid can be a polymerization liquid obtained by polymerizing a monomer composition in a solvent. The proportional content of each monomer in the monomer composition can be set in accordance with the proportional content of each repeating unit (monomer unit) in the organic particles.

[Polymerization initiator]

The polymerization initiator is not specifically limited and may suitably be an oil-soluble polymerization initiator. Examples of oil-soluble polymerization initiators that may be used include benzoyl peroxide, $\alpha,\alpha'$-azobisisobutyronitrile (AIBN), $\alpha,\alpha'$-azobis(2-methylbutyronitrile) (AMBN), t-butyl peroxy-2-ethylhexanoate, t-hexyl peroxy-2-ethylhexanoate, 1,1,3,3-tetramethylbutyl peroxy-2-ethylhexanoate, t-butyl peroxy-2-ethylacetate, t-butyl peroxyacetate, cumene peroxyneodecanoate, t-butyl peroxyneodecanoate, t-hexyl peroxyneodecanoate, t-butyl peroxylaurate, t-hexyl peroxybenzoate, and 3,5,5-trimethylhexanoyl peroxide. Of these oil-soluble polymerization initiators, t-butyl peroxy-2-ethylhexanoate and $\alpha,\alpha'$-azobis(2-methylbutyronitrile) can suitably be used. The used amount of the polymerization initiator can be adjusted as appropriate depending on the mass of the monomer composition and so forth. For example, the used amount of the polymerization initiator can be not less than 1.0 parts by mass and not more than 5.0 parts by mass when the mass of the monomer composition (in terms of solid content) is taken to be 100 parts by mass.

[Reductant]

The reductant is not specifically limited and may be ascorbic acid or a salt thereof (for example, sodium ascorbate), sodium bisulfite, sodium dithionite, or sodium formaldehyde sulfoxylate, or may be provided by causing the further presence of Fe ions with at least one of the preceding examples, for example. Of these reductants, ascorbic acid and salts thereof can suitably be used from a viewpoint of polymerizability and dispersibility of obtained organic particles in the dispersion liquid. The used amount of the reductant can be adjusted as appropriate depending on the mass of the monomer composition, the used amount of the polymerization initiator, and so forth. For example, the used amount of the reductant can be not less than 1.0 parts by mass and not more than 5.0 parts by mass when the mass of the monomer composition (in terms of solid content) is taken to be 100 parts by mass.

[Polymerization method and polymerization reaction]

The polymerization method used in production of the organic particles is not specifically limited and may, for example, be any of solution polymerization, suspension polymerization, bulk polymerization, and emulsion polymerization. Of these polymerization methods, emulsion polymerization is preferable. Moreover, ionic polymerization, radical polymerization, living radical polymerization, or the like may be adopted as the polymerization reaction. Seeded polymerization using seed particles is preferably performed in the polymerization. The polymerization conditions can be adjusted as appropriate depending on the polymerization method and so forth.

[Polymerization temperature]

The temperature when a polymerization reaction of polymerizing a polyfunctional monomer is caused to proceed in the presence of the reductant is preferably lower than 80°C, more preferably 60°C or lower, and even more preferably 50°C or lower. Note that the temperature when the polymerization reaction is caused to proceed can be 25°C or higher, for example, but is not specifically limited thereto. By performing the polymerization reaction in which the polyfunctional monomer is polymerized at lower than 80°C, it is possible to reduce the polymerization initiator decomposition product content and the unreacted polyfunctional monomer content in the obtained organic particle dispersion liquid. Note that in a case in which the organic particles are produced by seeded polymerization, no specific limitations are placed on the temperature conditions of a polymerization reaction in which the seed particles are produced. For example, the polymerization reaction in which the seed particles are produced can be performed in a temperature range of not lower than 25°C and not higher than 100°C. The same applies even in a case in which the seed particles include a polyfunctional monomer unit.

[Additives]

Known additives such as emulsifiers and chain transfer agents can be used in the polymerization during which the organic particles are produced, and the used amounts thereof can also be the same as typically used.

«Volume-average particle diameter of organic particles»

The volume-average particle diameter of the organic particles obtained as set forth above is preferably 50 nm or more, and more preferably 100 nm or more, and is preferably 900 nm or less, more preferably 500 nm or less, and even more preferably 200 nm or less. When the volume-average particle diameter of the organic particles is 50 nm or more, the resistance of a functional layer can be inhibited from excessively increasing, and initial coulombic efficiency and cycle characteristics of a secondary battery can be enhanced. On the other hand, when the volume-average particle diameter of the organic particles is 900 nm or less, excessive reduction of coating density when a composition for a functional layer is applied onto a substrate to form a functional layer can be inhibited, and heat shrinkage resistance of the obtained functional layer can be increased.

The volume-average particle diameter of the organic particles can be adjusted by altering the types and amounts of a polymerization initiator, a chain transfer agent, and/or an emulsifier used in production of the organic particles, for example. For example, in a case in which the organic particles are produced by seeded polymerization, the volume-average particle diameter of the obtained organic particles can be reduced by using a larger amount of an emulsifier in production of the seed particles so as to obtain smaller seed particles and can be increased by using a smaller amount of an emulsifier in production of the seed particles so as to obtain larger seed particles.

«Glass-transition temperature of organic particles»

The glass-transition temperature of the organic particles obtained as set forth above is preferably 100°C or higher, more preferably 120°C or higher, and even more preferably 150°C or higher. When the glass-transition temperature of the organic particles is 100°C or higher, heat shrinkage resistance of a functional layer can be further improved. The upper limit for the glass-transition temperature of the organic particles is not specifically limited but is normally 500°C or lower.

Note that the glass-transition temperature of the organic particles can be adjusted by altering the types and proportions of monomers used to produce the organic particles, for example. Moreover, the glass-transition temperature of the organic particles can be measured by a method described in the EXAMPLES section.

<Polymerization initiator decomposition product content in organic particle dispersion liquid>

The polymerization initiator decomposition product content in the organic particle dispersion liquid is required to be 50 ppm or less, and is preferably 30 ppm or less, more preferably 15 ppm or less, and even more preferably 10 ppm or less. When the polymerization initiator decomposition product content in the organic particle dispersion liquid is not more than any of the upper limits set forth above, initial coulombic efficiency of an obtained secondary battery can be further increased. Polymerization initiator decomposition product that remains in an obtained functional layer can cause a side reaction during initial charging and thereby act as a cause of secondary battery capacity loss. Therefore, secondary battery capacity loss can be reduced and initial coulombic efficiency can be effectively increased when the amount of polymerization initiator decomposition product that is contained in a functional layer is small.

Note that the polymerization initiator decomposition product content may be below the limit of detection, but is not specifically limited thereto. The polymerization initiator decomposition product content in the organic particle dispersion liquid can be controlled through appropriate adjustment of polymerization reaction conditions. More specifically, the polymerization initiator decomposition product content in the organic particle dispersion liquid can be controlled to 50 ppm or less by causing a polymerization reaction in which a polyfunctional monomer is polymerized to proceed under suitable temperature conditions (for example, lower than 80°C) in the presence of a polymerization initiator and a reductant.

<Unreacted polyfunctional monomer content in organic particle dispersion liquid>

The unreacted polyfunctional monomer content in the organic particle dispersion liquid is required to be 500 ppm or less, and is preferably 450 ppm or less, and more preferably 250 ppm or less. When the unreacted polyfunctional monomer content is not more than any of the upper limits set forth above, initial coulombic efficiency of a secondary battery can be further increased. Unreacted polyfunctional monomer that remains in an obtained functional layer can cause a side reaction during initial charging and thereby act as a cause of secondary battery capacity loss. Therefore, secondary battery capacity loss can be reduced and initial coulombic efficiency can be effectively increased when the amount of unreacted polyfunctional monomer that is contained in a functional layer is small.

Note that the unreacted polyfunctional monomer content may be below the limit of detection, but is not specifically limited thereto. The unreacted polyfunctional monomer content in the organic particle dispersion liquid can be controlled through appropriate adjustment of polymerization reaction conditions. More specifically, the unreacted polyfunctional monomer content in the organic particle dispersion liquid can be controlled to 500 ppm or less by causing a polymerization reaction in which a polyfunctional monomer is polymerized to proceed under suitable temperature conditions (for example, lower than 80°C) in the presence of a polymerization initiator and a reductant.

<Total polymerization initiator decomposition product and unreacted polyfunctional monomer content in organic particle dispersion liquid>

The total polymerization initiator decomposition product and unreacted polyfunctional monomer content in the organic particle dispersion liquid is required to be 500 ppm or less, and is preferably 450 ppm or less, and more preferably 250 ppm or less. When the total polymerization initiator decomposition product and unreacted polyfunctional monomer content is not more than any of the upper limits set forth above, initial coulombic efficiency of a secondary battery can be further increased. Note that no specific limitations are placed on the lower limit for the total polymerization initiator decomposition product and unreacted polyfunctional monomer content in the organic particle dispersion liquid, and the total content thereof may be below the limit of detection. Control of the total polymerization initiator decomposition product and unreacted polyfunctional monomer content in the organic particle dispersion liquid can be achieved in the same manner as for controlling the polymerization initiator decomposition product content and the unreacted polyfunctional monomer content.

<Component originating from reductant in organic particle dispersion liquid>

The organic particle dispersion liquid can contain a component that originates from the reductant. The component originating from the reductant may be unreduced reductant or an oxide of the reductant.

<Solvent>

Any known solvent in which the organic particles described above can be dispersed can be used as the solvent of the presently disclosed organic particle dispersion liquid. Of such solvents, water is preferable as the solvent of the organic particle dispersion liquid. Note that the solvent of the organic particle dispersion liquid may be a polymerization solvent that was used in production of the organic particles.

<Other components>

No specific limitations are placed on components other than the organic particles and the solvent that can be contained in the presently disclosed organic particle dispersion liquid. Examples of such components include known inorganic particles and known additives. The known inorganic particles may be any of those described in JP2017-103034A, for example. Moreover, examples of components that may be contained as known additives include, but are not specifically limited to, humectants, dispersants, leveling agents, antioxidants, thickeners, defoamers, and additives for electrolyte solution. Commonly known examples of these components (for example, refer to JP6052174B2) can be used without any specific limitations so long as they do not affect battery reactions. One of these other components may be used individually, or two or more of these other components may be used in combination in a freely selected ratio.

<Solid content concentration of organic particle dispersion liquid>

The solid content concentration of the presently disclosed organic particle dispersion liquid is preferably 10 mass% or more, and more preferably 20 mass% or more, and is preferably 40 mass% or less, and more preferably 35 mass% or less.

(Composition for secondary battery functional layer)

The presently disclosed composition for a functional layer contains a binder and the presently disclosed organic particle dispersion liquid set forth above and can optionally contain other components such as described above. As a result of the presently disclosed composition for a functional layer containing the presently disclosed organic particle dispersion liquid, the presently disclosed composition for a functional layer can form a functional layer having excellent heat shrinkage resistance, and a secondary battery can be caused to display excellent initial coulombic efficiency by using a battery member that includes this functional layer.

<Binder>

The binder is a component that is formed of a polymer and that, in a functional layer formed using the composition for a functional layer, can hold components such as the organic particles that are contained in the functional layer so as to prevent detachment thereof from the functional layer.

«Chemical composition»

The binder is preferably formed of a polymer that includes a cross-linkable monomer unit in a proportion of not less than 0.05 mass% and not more than 5 mass% and that also includes repeating units other than the cross-linkable monomer unit (i.e., other repeating units).

[Cross-linkable monomer unit]

Examples of cross-linkable monomers that can form the cross-linkable monomer unit include monomers that can form a cross-linked structure through polymerization without any specific limitations. A typical example of a cross-linkable monomer is a monomer that is thermally cross-linkable. More specifically, a monomer that includes a thermally cross-linkable group and also includes one ethylenically unsaturated bond per molecule or a polyfunctional ethylenically unsaturated monomer (monomer including two or more ethylenically unsaturated bonds per molecule) may be used.

The thermally cross-linkable group may be an epoxy group, an N-methylolamide group, an oxetanyl group, an oxazoline group, or any combination thereof. Of these thermally cross-linkable groups, an epoxy group is more preferable in terms of ease of cross-linking and cross-link density adjustment.

Examples of monomers that include an epoxy group as a thermally cross-linkable group and also include an ethylenically unsaturated bond include unsaturated glycidyl ethers such as vinyl glycidyl ether, allyl glycidyl ether, butenyl glycidyl ether, and o-allylphenyl glycidyl ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl ester of 3-cyclohexenecarboxylic acid, and glycidyl ester of 4-methyl-3-cyclohexenecarboxylic acid.

Examples of monomers that include an N-methylolamide group as a thermally cross-linkable group and that also include an ethylenically unsaturated bond include methylol group-containing (meth)acrylamides such as N-methylol (meth)acrylamide.

Examples of monomers that include an oxetanyl group as a thermally cross-linkable group and also include an ethylenically unsaturated bond include 3-((meth)acryloyloxymethyl)oxetane, 3-((meth)acryloyloxymethyl)-2-trifluoromethyloxetane, 3-((meth)acryloyloxymethyl)-2-phenyloxetane, 2-((meth)acryloyloxymethyl)oxetane, and 2-((meth)acryloyloxymethyl)-4-trifluoromethyloxetane.

Examples of monomers that include an oxazoline group as a thermally cross-linkable group and also include an ethylenically unsaturated bond include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Examples of polyfunctional ethylenically unsaturated monomers (monomers including two or more ethylenically unsaturated bonds per molecule) include the same monomers as polyfunctional ethylenically unsaturated monomers previously described in the "Organic particles" section.

One of the cross-linkable monomers described above may be used individually, or two or more of the cross-linkable monomers described above may be used in combination. Of these cross-linkable monomers, allyl methacrylate and allyl glycidyl ether are preferable.

The proportional content of the cross-linkable monomer unit in the binder when all repeating units of the polymer forming the binder are taken to be 100 mass% is preferably 0.05 mass% or more, more preferably 0.1 mass% or more, even more preferably 1 mass% or more, and particularly preferably 2 mass% or more, and is preferably 5 mass% or less, more preferably 3.5 mass% or less, even more preferably 3 mass% or less, and particularly preferably 2.5 mass% or less. When the proportion constituted by the cross-linkable monomer unit in the binder is 0.05 mass% or more, the degree of cross-linking of the binder is ensured, which makes it possible to inhibit excessive swelling in electrolyte solution and further improve cycle characteristics of a secondary battery. On the other hand, when the proportion constituted by the cross-linkable monomer unit in the binder is 5 mass% or less, binding capacity of the binder is ensured, thereby enabling improvement of adhesiveness of a functional layer, and heat shrinkage resistance of the functional layer can be further increased.

[Other repeating units]

Examples of other repeating units that may be included in the polymer forming the binder include, but are not specifically limited to, a monofunctional (meth)acrylic acid ester monomer unit, an aromatic monovinyl monomer unit, and an acidic group-containing monomer unit.

-Monofunctional (meth)acrylic acid ester monomer unit-

Examples of monofunctional (meth)acrylic acid ester monomers that can form the monofunctional (meth)acrylic acid ester monomer unit include the same monofunctional (meth)acrylic acid ester monomers as previously described in the "Organic particles" section. One of these monofunctional (meth)acrylic acid ester monomers may be used individually, or two or more of these monofunctional (meth)acrylic acid ester monomers may be used in combination. Of these monofunctional (meth)acrylic acid ester monomers, methyl acrylate, ethyl acrylate, n-butyl acrylate, 2-ethylhexyl acrylate, methyl methacrylate, ethyl methacrylate, n-butyl methacrylate, and 2-ethylhexyl methacrylate are preferable, and 2-ethylhexyl acrylate is more preferable.

The proportional content of the monofunctional (meth)acrylic acid ester monomer unit in the binder when all repeating units of the polymer forming the binder are taken to be 100 mass% is preferably 60 mass% or more, and more preferably 65 mass% or more, and is preferably 80 mass% or less, and more preferably 75 mass% or less. When the proportion constituted by the monofunctional (meth)acrylic acid ester monomer unit in the binder is 60 mass% or more, the glass-transition temperature of the binder is inhibited from excessively rising, and adhesiveness of a functional layer is ensured. On the other hand, when the proportion constituted by the monofunctional (meth)acrylic acid ester monomer unit in the binder is 80 mass% or less, cycle characteristics of a secondary battery can be further improved.

-Aromatic monovinyl monomer unit-

Examples of aromatic monovinyl monomers that can form the aromatic monovinyl monomer unit include styrene, styrene sulfonic acid and salts thereof (for example, sodium styrenesulfonate), α-methylstyrene, vinyltoluene, and 4-(tert-butoxy)styrene. One of these aromatic monovinyl monomers may be used individually, or two or more of these aromatic monovinyl monomers may be used in combination. Of these aromatic monovinyl monomers, styrene is preferable.

The proportional content of the aromatic monovinyl monomer unit in the binder when all repeating units of the polymer forming the binder are taken to be 100 mass% is preferably 10 mass% or more, and more preferably 20 mass% or more, and is preferably 40 mass% or less, and more preferably 30 mass% or less. When the proportion constituted by the aromatic monovinyl monomer unit in the binder is 10 mass% or more, the glass-transition temperature of the binder is not excessively lowered, and blocking of a battery member including a functional layer can be inhibited. On the other hand, when the proportion constituted by the aromatic monovinyl monomer unit in the binder is 40 mass% or less, the glass-transition temperature of the binder does not excessively rise, and adhesiveness of a functional layer can be ensured.

-Acidic group-containing monomer unit-

Examples of acidic group-containing monomers that can form the acidic group-containing monomer unit include the same acidic group-containing monomers as previously described in the "Organic particles" section. One of these acidic group-containing monomers may be used individually, or two or more of these acidic group-containing monomers may be used in combination. Of these acidic group-containing monomers, carboxy group-containing monomers are preferable, and acrylic acid is more preferable.

The proportional content of the acidic group-containing monomer unit in the binder when all repeating units of the polymer forming the binder are taken to be 100 mass% is preferably 2 mass% or more, and more preferably 2.5 mass% or more, and is preferably 8 mass% or less, and more preferably 5 mass% or less. When the proportion constituted by the acidic group-containing monomer unit in the binder is 2 mass% or more, polymer stability during production of the binder is ensured, and thus formation of aggregates is inhibited, and cycle characteristics of a secondary battery can be improved. On the other hand, when the proportion constituted by the acidic group-containing monomer unit in the binder is 8 mass% or less, the amount of water that is imported into a secondary battery can be reduced, and cycle characteristics of a secondary battery can be enhanced.

<<Production method>>

The binder can be produced by performing polymerization in an aqueous solvent such as water, for example, with respect to a monomer composition that contains the monomers described above. The proportional content of each monomer in the monomer composition can be set in accordance with the proportional content of each repeating unit (monomer unit) in the binder.

The polymerization method is not specifically limited and may, for example, be any of solution polymerization, suspension polymerization, bulk polymerization, and emulsion polymerization. Moreover, ionic polymerization, radical polymerization, living radical polymerization, or the like may be adopted as the polymerization reaction. The polymerization conditions can be adjusted as appropriate depending on the polymerization method and so forth.

Moreover, known additives such as emulsifiers, polymerization initiators, and chain transfer agents can be used in the polymerization, and the used amounts thereof may also be the same as typically used.

«Glass-transition temperature»

The glass-transition temperature of the binder obtained as set forth above is preferably -40°C or higher, and is preferably 0°C or lower, and more preferably -15°C or lower. When the glass-transition temperature of the binder is -40°C or higher, blocking of a battery member including a functional layer can be inhibited. On the other hand, when the glass-transition temperature of the binder is 0°C or lower, adhesiveness of a functional layer can be sufficiently ensured.

Note that the glass-transition temperature of the binder can be adjusted by altering the types and proportions of monomers used to produce the binder, for example. For example, the glass-transition temperature of the binder can be raised by increasing the proportion of an aromatic monovinyl monomer such as styrene used in production of the binder and can be lowered by reducing this proportion.

<<Content ratio of organic particles and binder>>

Although no specific limitations are placed on the content ratio of the organic particles and the binder in the composition for a functional layer, the proportion constituted by the binder among the total of the organic particles and the binder is preferably 1 mass% or more, more preferably 2 mass% or more, even more preferably 5 mass% or more, and particularly preferably 9 mass% or more, and is preferably 20 mass% or less, and more preferably 15 mass% or less. When the proportion constituted by the binder among the total of the organic particles and the binder is 1 mass% or more, dusting of the organic particles is inhibited, and heat shrinkage resistance of a functional layer can be sufficiently ensured. On the other hand, when the proportion constituted by the binder among the total of the organic particles and the binder is 20 mass% or less, the resistance of a functional layer is inhibited from excessively increasing, and cycle characteristics of a secondary battery can be sufficiently ensured.

<Production method of composition for secondary battery functional layer>

The presently disclosed composition for a functional layer can be produced by stirring and mixing the previously described organic particle dispersion liquid, the binder, and other optional components in the presence of a solvent such as water. Note that liquid contained in the organic particle dispersion liquid may be used in that form as the solvent of the composition for a functional layer.

Also note that the solid content concentration of the presently disclosed composition for a functional layer is normally not less than 10 mass% and not more than 40 mass%.

The stirring can be performed by a known method without any specific limitations. Specifically, the composition for a functional layer can be produced in slurry form by mixing the above-described components and solvent using a typical stirring vessel, ball mill, sand mill, bead mill, pigment disperser, ultrasonic disperser, grinding machine, homogenizer, planetary mixer, FILMIX, or the like. Mixing of the components and the solvent can normally be performed for a period of from 10 minutes to several hours in a temperature range of from room temperature to 80°C.

(Battery member for secondary battery)

The presently disclosed battery member for a secondary battery includes a functional layer for a secondary battery that has been formed using the composition for a functional layer set forth above. This battery member for a secondary battery can be formed by, for example, applying the composition for a functional layer set forth above onto the surface of a suitable substrate to form a coating film and then drying the coating film that is formed. In other words, the presently disclosed battery member for a secondary battery includes a functional layer formed of a dried product of the composition for a functional layer set forth above on a substrate. This functional layer contains the previously described organic particles and may optionally contain the previously described binder and other components. Note that cross-linking of the organic particles and the binder may be performed during drying of the composition for a functional layer or during heat treatment or the like that is optionally performed after drying (i.e., the functional layer included in the presently disclosed battery member for a secondary battery may contain a cross-linked product of the organic particles with one another, of the binder among itself, and/or of the organic particles and the binder). Each component contained in the functional layer is a component that was contained in the composition for a functional layer set forth above, and the preferred ratio of each component is also the same as the preferred ratio of each component in the composition for a functional layer.

The presently disclosed battery member for a secondary battery has excellent heat shrinkage resistance as a result of including a functional layer that has been formed using the composition for a functional layer set forth above. Moreover, by using this battery member for a secondary battery, it is possible to cause a secondary battery to display excellent initial coulombic efficiency.

<Substrate>

No limitations are placed on the substrate onto which the composition for a functional layer is applied. For example, a coating film of the composition for a functional layer may be formed on the surface of a releasable substrate, this coating film may be dried to form a functional layer, and then the releasable substrate may be peeled from the functional layer. The functional layer that is peeled from the releasable substrate in this manner can be used as a free-standing film in formation of the battery member for a secondary battery. Specifically, the functional layer that is peeled from the releasable substrate may be stacked on a separator substrate to form the presently disclosed battery member as a separator including the functional layer or may be stacked on an electrode substrate to form the presently disclosed battery member as an electrode including the functional layer.

However, from a viewpoint of omitting a step of peeling the functional layer and thereby increasing production efficiency of the battery member, it is preferable that the substrate onto which the composition for a functional layer is applied is a separator substrate or an electrode substrate, rather than a releasable substrate.

<<Separator substrate>>

The separator substrate is not specifically limited and may be a known separator substrate such as an organic separator substrate. The organic separator substrate is a porous member that is made from an organic material. Examples of organic separator substrates include microporous membranes and non-woven fabrics containing a polyolefin resin such as polyethylene or polypropylene, an aromatic polyamide resin, or the like, with a microporous membrane or non-woven fabric made from polyethylene being preferable due to having excellent strength. Although the separator substrate may be of any thickness, the thickness thereof is preferably not less than 5 μm and not more than 30 μm, more preferably not less than 5 μm and not more than 20 μm, and even more preferably not less than 5 μm and not more than 18 μm. A separator substrate thickness of 5 μm or more enables sufficient safety. Moreover, a separator substrate thickness of 30 μm or less can inhibit reduction of ion conductivity and deterioration of secondary battery output characteristics, and can also inhibit increase of heat shrinkage force of the separator substrate and increase heat resistance.

«Electrode substrate»

The electrode substrate (positive electrode substrate or negative electrode substrate) is not specifically limited and may, for example, be an electrode substrate obtained by forming an electrode mixed material layer on a current collector.

The current collector, the electrode active material (positive electrode active material or negative electrode active material) and binder for an electrode mixed material layer (binder for a positive electrode mixed material layer or binder for a negative electrode mixed material layer) in the electrode mixed material layer, and the method by which the electrode mixed material layer is formed on the current collector can be known examples thereof such as any of those described in JP6052174B2, for example.

<Formation method of functional layer for secondary battery>

Examples of methods by which the functional layer may be formed on a substrate such as the separator substrate or the electrode substrate described above include:

(1) a method in which the presently disclosed composition for a functional layer is applied onto the surface of the separator substrate or the electrode substrate (surface at the electrode mixed material layer-side in the case of the electrode substrate; same applies below) and is then dried;

(2) a method in which the separator substrate or the electrode substrate is immersed in the presently disclosed composition for a functional layer and is then dried; and

(3) a method in which the presently disclosed composition for a functional layer is applied onto a releasable substrate and is dried to produce a functional layer that is then transferred onto the surface of the separator substrate or the electrode substrate.

Of these methods, method (1) is particularly preferable since it allows simple control of the thickness of the functional layer. In more detail, method (1) includes a step of applying the composition for a functional layer onto a substrate (application step) and a step of drying the composition for a functional layer that has been applied onto the substrate so as to form a functional layer (functional layer formation step).

Note that a functional layer may be formed at just one side of the separator substrate or electrode substrate, or functional layers may be formed at both sides of the separator substrate or electrode substrate depending on the structure of the secondary battery that is to be produced. In a case in which the separator substrate is used as the substrate, it is preferable that functional layers are formed at both sides of the separator substrate, and in a case in which the electrode substrate is used as the substrate, it is preferable that a functional layer is formed at one side of the electrode substrate, and particularly on the electrode mixed material layer.

«Application step»

Examples of methods by which the composition for a functional layer can be applied onto the substrate in the application step include, but are not specifically limited to, doctor blading, reverse roll coating, direct roll coating, gravure coating, extrusion coating, and brush coating.

«Functional layer formation step»

The method by which the composition for a functional layer on the substrate is dried in the functional layer formation step is not specifically limited and may be a commonly known method. Examples of drying methods that may be used include drying by warm, hot, or low-humidity air, drying in a vacuum, and drying through irradiation with infrared light, electron beams, or the like. Although no specific limitations are placed on the drying conditions, the drying temperature is preferably 40°C to 150°C, and the drying time is preferably 2 minutes to 30 minutes.

<Thickness of functional layer>

The thickness of each functional layer formed on the substrate is preferably 0.5 $\mu$m or more, and is preferably 1.5 $\mu$m or less, more preferably 1.3 $\mu$m or less, and even more preferably 1.1 $\mu$m or less. When the thickness of the functional layer is 0.5 $\mu$m or more, heat shrinkage resistance of the functional layer can be sufficiently ensured. On the other hand, when the thickness of the functional layer is 1.5 $\mu$m or less, the resistance of the functional layer is inhibited from excessively increasing, and cycle characteristics and initial coulombic efficiency of a secondary battery can be enhanced.

<Other constituent elements>

The presently disclosed battery member (for example, a separator or an electrode) may include other constituent elements besides the separator substrate or electrode substrate and the functional layer that is formed using the presently disclosed composition for a functional layer so long as the disclosed effects are not significantly lost.

(Secondary battery)

The presently disclosed secondary battery includes the presently disclosed battery member set forth above. More specifically, the presently disclosed secondary battery includes a positive electrode, a negative electrode, a separator, and an electrolyte solution, and includes at least one among a positive electrode, a negative electrode, and a separator that is the battery member set forth above. As a result of including the presently disclosed battery member, the presently disclosed secondary battery has excellent initial coulombic efficiency and also has excellent stability because the occurrence of a short circuit between the positive electrode and the negative electrode in a high-temperature environment is sufficiently inhibited.

<Positive electrode, negative electrode, and separator>

At least one of the positive electrode, the negative electrode, and the separator used in the presently disclosed secondary battery is the presently disclosed battery member. In the case of a positive electrode, negative electrode, or separator that does not correspond to the presently disclosed battery member, it is possible to use an electrode formed of an electrode substrate such as previously described or a separator formed of a separator substrate such as previously described without any specific limitations.

<Electrolyte solution>

The electrolyte solution is normally an organic electrolyte solution obtained by dissolving a supporting electrolyte in an organic solvent. In a lithium ion secondary battery, for example, which is one type of non-aqueous secondary battery, a lithium salt is used as the supporting electrolyte. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Production method of secondary battery>

The presently disclosed secondary battery set forth above can be produced by, for example, stacking the positive electrode and the negative electrode with the separator in-between, performing rolling, folding, or the like of the resultant laminate, as necessary, to place the laminate in a battery container, injecting the electrolyte solution into the battery container, and sealing the battery container. Note that at least one battery member among the positive electrode, the negative electrode, and the separator is a battery member that includes a functional layer. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

EXAMPLES

The following provides a more specific description of the present disclosure based on examples. However, the present disclosure is not limited to the following examples. In the following description, "%" and "parts" used in expressing quantities are by mass, unless otherwise specified.

Various measurements and evaluations in the examples and comparative examples were performed as follows.

<Volume-average particle diameter of organic particles>

The volume-average particle diameter of a polymer obtained in each example or comparative example was measured by laser diffraction. Specifically, a produced water dispersion (solid content concentration 0.1 mass% to 2 mass%) containing particles was used as a sample, and the volume-average particle diameter D50 (nm) was determined as the particle diameter at which, in a particle size distribution (by volume) obtained using a laser diffraction particle size analyzer (produced by Beckman Coulter, Inc.; product name: LS-13 320), cumulative volume calculated from a small diameter end of the distribution reached 50%.

<Glass-transition temperature (Tg)>

A water dispersion of organic particles and a water dispersion of a binder obtained in each example or comparative example were each dried at a temperature of 130°C for 1 hour to obtain a measurement sample.

The measurement sample was weighed into an aluminum pan in an amount of 10 mg and was then measured by a differential scanning calorimeter (EXSTAR DSC6220 produced by SII NanoTechnology Inc.) under conditions prescribed in JIS Z 8703 with a measurement temperature range of -100°C to 200°C and a heating rate of 10°C/min so as to obtain a differential scanning calorimetry (DSC) curve. Note that an empty aluminum pan was used as a reference. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

<Polymerization initiator decomposition product and unreacted polyfunctional monomer content>

The amounts of polymerization initiator decomposition product and unreacted polyfunctional monomer in an organic particle dispersion liquid were measured by the following procedure using a gas chromatograph (GC-2010 produced by Shimadzu Corporation and non-polar column (DB-1 produced by Agilent Technologies Inc.; size: 0.25 mm $\times$ 30 m $\times$ 1 $\mu$m)).

(1) Preparation and quantification of internal standard solution

Dodecane as an internal standard was diluted to a concentration of 1% with dimethylformamide (DMF) to obtain an internal standard solution. Next, each polyfunctional monomer (EDMA or TMPTMA) and polymerization initiator (PERBUTYL O or AMBN) used in production of organic particles in the examples and comparative examples was diluted to a concentration of 0.1% with DMF to obtain a sample solution. A measurement solution was produced by precisely weighing 2 g of the sample solution and 0.2 g of the internal standard solution, and then adding and mixing 5 g of acetone therewith. Next, 1 $\mu$L of the obtained measurement solution was introduced into the apparatus and was measured by the gas chromatograph so as to determine correction factors from integrated values for the sample and dodecane.

(2) Measurement of sample

A mixture was obtained by precisely weighing 5 g of an organic particle dispersion liquid and 0.2 g of the previously described internal standard solution, and then adding and mixing 5 g of acetone therewith. The obtained mixture was left at rest for at least one day and one night, and then the supernatant was filtered using a 0.45 $\mu$m filter to obtain a sample. Next, 1 $\mu$L of the obtained sample was introduced into the apparatus and was measured by the gas chromatograph. The concentrations of unreacted polyfunctional monomer and polymerization initiator decomposition product in the organic particle dispersion liquid (concentration [ppm] based on total mass of organic particle dispersion liquid) were calculated through integrated values for the sample and correction factors determined by the procedure described above in (1).

<Thickness of functional layer>

The thickness of a functional layer was calculated by subtracting the thickness of a substrate on which a functional layer had not been formed from the thickness of a battery member in which a functional layer and a substrate (separator substrate or electrode substrate) were stacked. Note that the thicknesses of the battery member and the substrate were each determined by measuring the thickness thereof at 10 arbitrary points using a contact-type thickness meter (Digimatic Indicator Code No. 543-575 produced by Mitutoyo Corporation), and then calculating an average value of the measured thicknesses.

<Heat shrinkage resistance of functional layer>

A separator (thickness: 9 $\mu$m) made of a single layer of polyethylene produced by a wet method was prepared as a separator substrate. A composition for a functional layer obtained in each example or comparative example was applied onto one side of this separator substrate, and the composition for a functional layer on the separator substrate was dried at 50°C for 10 minutes to form a functional layer (thickness: 1.0 $\mu$m). The separator including this functional layer was taken to be a separator for evaluation.

The produced separator for evaluation was cut out as a 12 cm $\times$ 12 cm square, and then a square having a side length of 10 cm was drawn in an inner part of the square separator so as to obtain a test specimen. The test specimen was placed inside a 130°C thermostatic tank and was left therein for 1 hour. Thereafter, the area change of the square drawn in the inner part of the test specimen was calculated (area change = {(area of square before being left - area of square after being left)/area of square before being left} × 100%) as the heat shrinkage rate and was evaluated by the following standard. A smaller heat shrinkage rate indicates that the functional layer formed using the composition for a functional layer has better heat shrinkage resistance.

A: Heat shrinkage rate of less than 2%
B: Heat shrinkage rate of not less than 2% and less than 3%
C: Heat shrinkage rate of not less than 3% and less than 5%
D: Heat shrinkage rate of 5% or more

<Initial coulombic efficiency>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C (charge capacity in this charging taken to be C1). Thereafter, the lithium ion secondary battery was subjected to 12 hours of aging at a temperature of 60°C. The lithium ion secondary battery was then CC-CV charged (upper limit cell voltage: 4.30 V) by a 0.2C constant-current method (charge capacity in this charging taken to be C2) and CC discharged to 3.00 V by a 0.2C constant-current method (discharge capacity in this discharging taken to be D) at a temperature of 25°C. The initial coulombic efficiency was calculated by the following formula using the charge capacities C1 and C2 and the discharge capacity D that were determined in this manner and was evaluated in accordance with the following standard. A larger value for the initial coulombic efficiency indicates that the secondary battery has better initial characteristics.

$$\text{Initial coulombic efficiency} = D/(C1 + C2) \times 100(\%)$$

A: 90.5% or more
B: Not less than 90% and less than 90.5%
C: Less than 90%

<Cycle characteristics>

A lithium ion secondary battery produced in each example or comparative example for which initial coulombic efficiency had been measured was subjected to 100 cycles of a charge/discharge operation with a cell voltage of 4.30 V to 3.00 V and a charge/discharge rate of 1.0C in an environment having a temperature of 25°C. The capacity of the $1^{st}$ cycle (i.e., the initial discharge capacity X1) and the discharge capacity X2 of the $100^{th}$ cycle were measured, a capacity maintenance rate (%) (= (X2/X1) × 100) was calculated, and the capacity maintenance rate was evaluated by the following standard. A larger value for the capacity maintenance rate indicates that the secondary battery has better cycle characteristics.

A: Capacity maintenance rate of 80% or more
B: Capacity maintenance rate of not less than 70% and less than 80%
C: Capacity maintenance rate of less than 70%

(Example 1)

<Production of organic particle dispersion liquid>

(1) Production of monomer composition for seed particles

A mixture was obtained by loading 1.0 parts of sodium dodecyl sulfate, 0.40 parts of ammonium persulfate, and 180 parts of deionized water into a reactor A including a stirrer and mixing these materials, and was then heated to 65°C. Meanwhile, a monomer composition for seed particles was produced in a separate vessel by mixing 80.0 parts of n-butyl acrylate as a monofunctional (meth)acrylic acid ester monomer, 10.0 parts of methacrylic acid as an acidic group-containing monomer, 10.0 parts of acrylonitrile as a nitrile group-containing monomer, 0.6 parts of sodium dodecyl sulfate, and 40 parts of deionized water.
This monomer composition for seed particles was continuously added into the aforementioned reactor A over 4 hours to perform a polymerization reaction. A temperature of 65°C was maintained inside the reactor during continuous addition of the monomer composition for seed particles. Moreover, once the continuous addition was complete, the polymerization reaction was continued for a further 3 hours at 80°C. In this manner, a water dispersion of seed particles was obtained. Note that the volume-average particle diameter of the seed particles, as measured in the same manner as for organic particles, was 95 nm.

(2) Seeded polymerization of polyfunctional monomer

Next, a reactor including a stirrer was charged with 20 parts in terms of solid content of the water dispersion of seed particles described above (among which, 16 parts was n-butyl acrylate units, 2 parts was methacrylic acid units, and 2 parts was acrylonitrile units), 80 parts of ethylene glycol dimethacrylate (Kyoeisha Chemical Co., Ltd.; product name: LIGHT ESTER EG) as a polyfunctional monomer, 5 parts of sodium dodecylbenzenesulfonate, and 1.6 parts of t-butyl peroxy-2-ethylhexanoate (produced by NOF Corporation; product name: PERBUTYL O) as a polymerization initiator. In addition, 160 parts of deionized water was added and stirred therewith at 35°C for 12 hours to cause complete absorption of the polyfunctional monomer and the polymerization initiator by the seed particles. Thereafter, a temperature of 40°C was maintained inside the reactor while ascorbic acid aqueous solution (amount in terms of solid content: 1.3 parts) was added dropwise over 1 hour as a reductant, and then a polymerization reaction (seeded polymerization) was performed for a further 2 hours to yield a water dispersion of organic particles. The obtained organic particle dispersion liquid was cooled to 25°C and was adjusted to pH 8.0 through addition of sodium hydroxide aqueous solution. The solid content concentration was also adjusted using deionized water so as to obtain an organic particle dispersion liquid (solid content concentration: 20%) of organic particles dispersed in water.

The volume-average particle diameter and glass-transition temperature of the obtained organic particles were measured. The results are shown in Table 1. Note that a peak was not observed in the measurement temperature range (-100°C to 200°C) in measurement of the glass-transition temperature, and thus the glass-transition temperature of the organic particles was confirmed to be higher than 200°C (same applies for Examples 2 to 10 and Comparative Examples 1 to 3, 5, and 6).

<Production of binder>

A reactor B including a stirrer was supplied with 70 parts of deionized water, 0.20 parts of polyoxyethylene lauryl ether (produced by Kao Corporation; product name: EMULGEN® 120 (EMULGEN is a registered trademark in Japan, other countries, or both)) as an emulsifier, and 0.5 parts of ammonium persulfate, the gas phase was purged with nitrogen gas, and the temperature was raised to 60°C. Meanwhile, a monomer composition was obtained in a separate vessel by mixing 50 parts of deionized water, 0.5 parts of polyoxyethylene lauryl ether (produced by Kao Corporation; product name: EMULGEN® 120) as an emulsifier, 70 parts of 2-ethylhexyl acrylate as a monofunctional (meth)acrylic acid ester monomer, 25 parts of styrene as an aromatic monovinyl monomer, 1.7 parts of allyl glycidyl ether and 0.3 parts of allyl methacrylate as cross-linkable monomers, and 3 parts of acrylic acid as an acidic group-containing monomer.

The monomer composition was continuously added into the reactor B over 4 hours to perform polymerization. The reaction was carried out at 70°C during the continuous addition. Once the continuous addition was complete, a further 3 hours of stirring was performed at 80°C, and then the reaction was ended to yield a water dispersion of a binder.

The obtained water dispersion of the binder was cooled to 25°C, was subsequently adjusted to pH 8.0 through addition of sodium hydroxide aqueous solution, and then the solid content concentration thereof was adjusted with deionized water to obtain a water dispersion (solid content concentration: 40%) of the binder. Note that the volume-average particle diameter of the binder, as measured in the same manner as for organic particles, was 180 nm.

<Production of composition for functional layer>

A composition for a functional layer (solid content concentration: 20%) was obtained by mixing the organic particle dispersion liquid obtained as described above, the water dispersion of the binder obtained as described above, carboxymethyl cellulose (produced by Daicel Corporation; product name: DAICEL 1220) as a thickener, and a humectant (produced by San Nopco Limited; product name: SN WET 980) in water such that organic particles:binder:thickener:humectant (solid content mass ratio) = 82:12:5:1 (proportion constituted by binder among total of organic particles and binder: approximately 13%). The obtained composition for a functional layer was used to produce a separator for evaluation and evaluate heat shrinkage resistance of a functional layer. The result is shown in Table 1.

<Production of separator including functional layers at both sides>

A separator (thickness: 9 μm) made of a single layer of polyethylene produced by a wet method was prepared as a separator substrate. The composition for a functional layer obtained as described above was applied onto one side of this separator substrate, and the composition for a functional layer on the separator substrate was dried at 50°C for 10 minutes to form a functional layer (thickness: 1.0 μm). In addition, the composition for a functional layer obtained as described above was applied onto the other side of the separator substrate, and the composition for a functional layer on the separator substrate was dried at 50°C for 10 minutes to form a functional layer (thickness: 1.0 μm), and thereby produce a separator including functional layers at both sides.

<Production of positive electrode>

A slurry composition for a positive electrode was obtained by adding 3 parts (in terms of solid content) of polyvinylidene fluoride (PVDF produced by Kureha Corporation; product name: KF-1100) as a binder for a positive electrode to 95 parts of $LiCoO_2$ as a positive electrode active material, further adding 2 parts of acetylene black as a conductive material and 20 parts of N-methylpyrrolidone as a solvent, and mixing these materials in a planetary mixer. This slurry composition for a positive electrode was applied onto one side of aluminum foil of 18 μm in thickness, was dried at 120°C for 3 hours, and was subsequently rolled by roll pressing to obtain a positive electrode (thickness: 100 μm) including a positive electrode mixed material layer.

<Production of negative electrode>

A slurry composition for a negative electrode was obtained by mixing 98 parts of graphite (particle diameter: 20 μm; specific surface area: 4.2 $m^2$/g) as a negative electrode active material and 1 part (in terms of solid content) of styrene-butadiene rubber (SBR; glass-transition temperature: -10°C) as a binder for a negative electrode, further adding 1.0 parts of carboxymethyl cellulose to this mixture, and mixing these materials in a planetary mixer. This slurry composition for a negative electrode was applied onto one side of copper foil of 18 μm in thickness, was dried at 120°C for 3 hours, and was subsequently rolled by roll pressing to obtain a negative electrode (thickness: 100 μm) including a negative electrode mixed material layer.

<Production of secondary battery>

The positive electrode obtained as described above was cut out as 49 cm × 5 cm and was placed on a stage such that the surface at the positive electrode mixed material layer-side was facing upward. The separator obtained as described above (including functional layers at both sides) was cut out as 120 cm × 5.5 cm and was arranged on the positive electrode mixed material layer of the positive electrode such that the positive electrode was positioned at a longitudinal direction left-hand side of the separator. Moreover, the negative electrode obtained as described above was cut out as 50 cm × 5.2 cm and was arranged on the separator such that the surface at the negative electrode mixed material layer-side was in contact with the separator and such that the negative electrode was positioned at a longitudinal direction right-hand side of the separator. A laminate obtained in this manner was wound up with the middle of the separator in the longitudinal direction at the center using a winding machine so as to obtain a roll. This roll was enclosed in an aluminum packing case serving as a battery case, and then an electrolyte solution (solvent: ethylene carbonate/ethyl methyl carbonate/vinylene carbonate (volume mixing ratio) = 30.0/70.0/1.5; electrolyte: $LiPF_6$ of 1 M in concentration) was injected such that no air remained. The aluminum packing case was closed and sealed through heat sealing at 150°C to thereby produce a wound lithium ion secondary battery. The initial coulombic efficiency and cycle characteristics of the obtained lithium ion secondary battery were evaluated. The results are shown in Table 1.

(Example 2)

Various operations and evaluations were performed in the same way as in Example 1 with the exception that trimethylolpropane trimethacrylate was used instead of ethylene glycol dimethacrylate as a polyfunctional monomer in production of organic particles. The results are shown in Table 1.

(Example 3)

Various operations and evaluations were performed in the same way as in Example 1 with the exception that in production of organic particles, seed particles were produced using a monomer composition for seed particles in which the amount of n-butyl acrylate was changed to 84.6 parts, the amount of methacrylic acid was changed to 7.7 parts, and the amount of acrylonitrile was changed to 7.7 parts, and the amount in terms of solid content of these seed particles was changed to 13 parts (among which, 11 parts was n-butyl acrylate units, 1 part was methacrylic acid units, and 1 part was acrylonitrile units) and the amount of ethylene glycol dimethacrylate was changed to 87 parts in seeded polymerization. The results are shown in Table 1.

(Example 4)

Various operations and evaluations were performed in the same way as in Example 1 with the exception that in production of organic particles, seed particles were produced using a monomer composition for seed particles in which the amount of n-butyl acrylate was changed to 83.4 parts, the amount of methacrylic acid was changed to 8.3 parts, and the amount of acrylonitrile was changed to 8.3 parts, and the amount in terms of solid content of these seed particles was changed to 36 parts (among which, 30 parts was n-butyl acrylate units, 3 parts was methacrylic acid units, and 3 parts was acrylonitrile units) and the amount of ethylene glycol dimethacrylate was changed to 64 parts in seeded polymerization. The results are shown in Table 1.

(Examples 5 and 6)

Various operations and evaluations were performed in the same way as in Example 1 with the exception that in production of organic particles, the amount of sodium dodecyl sulfate charged to the reactor A including a stirrer was changed from 1.0 parts to 0.15 parts (Example 5) or 0.05 parts (Example 6) so as to adjust the volume-average particle diameter of seed particles to 160 nm (Example 5) or 400 nm (Example 6). The results are shown in Table 1.

(Example 7)

In production of organic particles, the polymerization reaction (seeded polymerization) in the step of "(2) Seeded polymerization of polyfunctional monomer" was performed under temperature conditions of 60°C. With the exception of this point, various operations and evaluations were performed in the same way as in Example 1. The results are shown in Table 1.

(Example 8)

In production of organic particles, the additive amount of the polymerization initiator was changed to 3.2 parts and the additive amount of the reductant was changed to 2.6 parts in the step of "(2) Seeded polymerization of polyfunctional monomer". With the exception of this point, various operations and evaluations were performed in the same way as in Example 1. The results are shown in Table 1.

(Example 9)

In production of organic particles, the additive amount of the polymerization initiator was changed to 1.2 parts and the additive amount of the reductant was changed to 1.0 parts in the step of "(2) Seeded polymerization of polyfunctional monomer". With the exception of this point, various operations and evaluations were performed in the same way as in Example 1. The results are shown in Table 1.

(Example 10)

In production of organic particles, the type of reductant was changed to sodium ascorbate and the additive amount of the reductant was changed to 1.5 parts in the step of "(2) Seeded polymerization of polyfunctional monomer". With the exception of these points, various operations and evaluations were performed in the same way as in Example 1. The results are shown in Table 1.

(Example 11)

Various operations and evaluations were performed in the same way as in Example 1 with the exception that in production of organic particles, 1.6 parts of sodium ascorbate was added as a reductant and the used polymerization initiator was changed to $\alpha,\alpha'$-azobis(2-methylbutyronitrile) in the step of "(2) Seeded polymerization of polyfunctional monomer". The results are shown in Table 1. Note that a peak was not observed in the measurement temperature range (-100°C to 200°C) in measurement of the glass-transition temperature of the organic particles, and thus the glass-transition temperature of the organic particles was confirmed to be higher than 200°C.

(Comparative Example 1)

In production of organic particles, various operations were performed in the same way as in Example 1 up until the step in which monomer is absorbed in the step of "(2) Seeded polymerization of polyfunctional monomer". Thereafter, a temperature of 90°C was maintained inside the reactor and a polymerization reaction (seeded polymerization) was performed for 5 hours, without adding a reductant, so as to obtain an organic particle dispersion liquid. The obtained organic particles were evaluated in the same way as in Example 1. The results are shown in Table 1.

(Comparative Example 2)

Various operations and evaluations were performed in the same way as in Comparative Example 1 with the exception that in production of organic particles, the amount of the polymerization initiator was changed to 4 parts in the step of "(2) Seeded polymerization of polyfunctional monomer". The results are shown in Table 1.

(Comparative Example 3)

Various operations and evaluations were performed in the same way as in Comparative Example 1 with the exception that in production of organic particles, the amount of the polymerization initiator was changed to 1 part in the step of "(2) Seeded polymerization of polyfunctional monomer". The results are shown in Table 1.

(Comparative Example 4)

Various operations and evaluations were performed in the same way as in Example 1 with the exception that in production of organic particles, seed particles were produced using a monomer composition for seed particles in which the amount of n-butyl acrylate was changed to 95.2 parts, the amount of methacrylic acid was changed to 1.0 parts, and the amount of acrylonitrile was changed to 3.8 parts, and the amount in terms of solid content of these seed particles was changed to 52 parts (among which, 49.5 parts was n-butyl acrylate units, 0.5 parts was methacrylic acid units, and 2 parts was acrylonitrile units) and the amount of ethylene glycol dimethacrylate was changed to 48 parts in seeded polymerization. The results are shown in Table 1.

(Comparative Example 5)

In production of organic particles, the step of "(2) Seeded polymerization of polyfunctional monomer" was performed in the same way as in Comparative Example 1, and steam was introduced into the obtained organic particle dispersion liquid at a temperature of 90°C so as to remove unreacted monomer and polymerization initiator decomposition product over 12 hours and thereby obtain a water dispersion of organic particles. With the exception of these points, various operations and evaluations were performed in the same way as in Comparative Example 1. The results are shown in Table 1.

(Comparative Example 6)

Various operations and evaluations were performed in the same way as in Comparative Example 5 with the exception that in production of organic particles, the time for which steam was introduced was changed to 24 hours in the step of "(2) Seeded polymerization of polyfunctional monomer". The results are shown in Table 1.

In Table 1, shown below:

"EDMA" indicates ethylene glycol dimethacrylate unit;
"TMPTMA" indicates trimethylolpropane trimethacrylate unit;
"BA" indicates n-butyl acrylate unit;
"AN" indicates acrylonitrile unit;
"MAA" indicates methacrylic acid unit;
"AMA" indicates allyl methacrylate unit;
"AGE" indicates allyl glycidyl ether unit;
"2EHA" indicates 2-ethylhexyl acrylate unit;
"ST" indicates styrene unit;
"AA" indicates acrylic acid unit; and
"AMBN" indicates $\alpha,\alpha'$-azobis(2-methylbutyronitrile).

Table 1

| | Examples | | | | | | | | | | | Comparative examples | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 1 | 2 | 3 | 4 | 5 | 6 |
| Organic particles — Chemical composition — Polyfunctional monomer unit — Type | EDMA | TMPTMA | EDMA | EDMA | EDMA | EDMA | EDMA | EDMA | EDMA | EDMA | EDMA | EDMA | EDMA | EDMA | EDMA | EDMA | EDMA |
| Proportional content [mass%] | 80 | 80 | 87 | 64 | 80 | 80 | 80 | 80 | 80 | 80 | 80 | 80 | 80 | 80 | 48 | 80 | 80 |
| Monofunctional (meth)acrylic acid ester monomer unit — Type | BA | BA | BA | BA | BA | BA | BA | BA | BA | BA | BA | BA | BA | BA | BA | BA | BA |
| Proportional content [mass%] | 16 | 16 | 11 | 30 | 16 | 16 | 16 | 16 | 16 | 16 | 16 | 16 | 16 | 16 | 49.5 | 16 | 16 |
| Nitrile group-containing monomer unit — Type | AN | AN | AN | AN | AN | AN | AN | AN | AN | AN | AN | AN | AN | AN | AN | AN | AN |
| Proportional content [mass%] | 2 | 2 | 1 | 3 | 2 | 2 | 2 | 2 | 2 | 2 | 2 | 2 | 2 | 2 | 2 | 2 | 2 |
| Acidic group-containing monomer unit — Type | MAA | MAA | MAA | MAA | MAA | MAA | MAA | MAA | MAA | MAA | MAA | MAA | MAA | MAA | MAA | MAA | MAA |
| Proportional content [mass%] | 2 | 2 | 1 | 3 | 2 | 2 | 2 | 2 | 2 | 2 | 2 | 2 | 2 | 2 | 0.5 | 2 | 2 |
| Production conditions — Reaction temperature [°C] | 40 | 40 | 40 | 40 | 40 | 40 | 60 | 40 | 40 | 40 | 40 | 40 | 40 | 40 | 40 | 40 | 40 |
| Polymerization initiator — Type | PERBUTYL O | | | | | | | | | AMBN | | PERBUTYL O | | | | | |
| [mass%] *based on 100 parts of monomer | 1.6 | 1.6 | 1.6 | 1.6 | 1.6 | 1.6 | 1.6 | 3.2 | 1.2 | 1.6 | 1.6 | 2 | 4 | 1 | 1.6 | 2 | 2 |
| Reductant — Type | Ascorbic acid | | | | | | | | | Sodium ascorbate | | None | None | None | Sodium ascorbate | None | None |
| [mass%] *based on 100 parts of monomer | 1.3 | 1.3 | 1.3 | 1.3 | 1.3 | 1.3 | 1.3 | 2.6 | 1.0 | 1.5 | 1.6 | None | None | None | 1.3 | None | None |
| Purification conditions (steam) — Temperature [°C] | None | | | | | | | | | | | None | | | | 90 | 90 |
| (steam) — Time [h] | None | | | | | | | | | | | None | | | | 12 | 24 |
| Volume-average particle diameter [nm] | 150 | 150 | 150 | 150 | 250 | 150 | 150 | 150 | 150 | 150 | 150 | 150 | 150 | 150 | 150 | 150 | 150 |
| Tg [°C] | >200 | >200 | >200 | >200 | >200 | >200 | >200 | >200 | >200 | >200 | >200 | >200 | >200 | >200 | 80 | >200 | >200 |
| Solvent | Water | | | | | | | | | | | Water | | | | | |
| Polymerization initiator decomposition product [ppm] | 2 | 4 | 3 | 4 | 4 | 5 | 6 | 12 | 1 | 9 | 2 | 530 | 920 | 25 | 2 | 190 | 110 |
| Unreacted polyfunctional monomer [ppm] | 210 | 360 | 430 | 80 | 280 | 450 | 200 | 30 | 470 | 230 | 240 | 190 | 30 | 1850 | 95 | 40 | 15 |
| Polymerization initiator decomposition product + Unreacted polyfunctional monomer [ppm] | 212 | 364 | 433 | 84 | 284 | 455 | 206 | 42 | 471 | 239 | 242 | 720 | 950 | 1875 | 97 | 230 | 125 |
| Binder — Chemical composition — Cross-linkable monomer unit — Type | AMA | AMA | AMA | AMA | AMA | AMA | AMA | AMA | AMA | AMA | AMA | AMA | AMA | AMA | AMA | AMA | AMA |
| Proportional content [mass%] | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| Type | AGE | AGE | AGE | AGE | AGE | AGE | AGE | AGE | AGE | AGE | AGE | AGE | AGE | AGE | AGE | AGE | AGE |
| Proportional content [mass%] | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 |
| Monofunctional (meth)acrylic acid ester monomer unit — Type | 2EHA | 2EHA | 2EHA | 2EHA | 2EHA | 2EHA | 2EHA | 2EHA | 2EHA | 2EHA | 2EHA | 2EHA | 2EHA | 2EHA | 2EHA | 2EHA | 2EHA |
| Proportional content [mass%] | 70 | 70 | 70 | 70 | 70 | 70 | 70 | 70 | 70 | 70 | 70 | 70 | 70 | 70 | 70 | 70 | 70 |
| Aromatic monovinyl monomer unit — Type | ST | ST | ST | ST | ST | ST | ST | ST | ST | ST | ST | ST | ST | ST | ST | ST | ST |
| Proportional content [mass%] | 25 | 25 | 25 | 25 | 25 | 25 | 25 | 25 | 25 | 25 | 25 | 25 | 25 | 25 | 25 | 25 | 25 |
| Acidic group-containing monomer unit — Type | AA | AA | AA | AA | AA | AA | AA | AA | AA | AA | AA | AA | AA | AA | AA | AA | AA |
| Proportional content [mass%] | 3 | 3 | 3 | 3 | 3 | 3 | 3 | 3 | 3 | 3 | 3 | 3 | 3 | 3 | 3 | 3 | 3 |
| Tg [°C] | -30 | -30 | -30 | -30 | -30 | -30 | -30 | -30 | -30 | -30 | -30 | -30 | -30 | -30 | -30 | -30 | -30 |
| Evaluation — Heat shrinkage resistance | A | A | A | B | A | B | A | A | A | A | A | A | A | A | D | A | A |
| Initial coulombic efficiency | A | B | B | A | B | B | A | B | B | A | A | C | C | C | A | C | C |
| Cycle characteristics | A | A | B | A | A | A | A | A | A | A | A | A | A | B | C | A | B |

It can be seen from Table 1 that in a situation in which a functional layer was formed using a composition for a functional layer containing an organic particle dispersion liquid that was a dispersion liquid of organic particles including a polyfunctional monomer unit in a proportion of 50 mass% or more, that had a polymerization initiator decomposition product content of 50 ppm or less, and that had a total polymerization initiator decomposition product and unreacted polyfunctional monomer content of 500 ppm or less as in Examples 1 to 11, the obtained functional layer had excellent heat shrinkage resistance, and an obtained secondary battery could display high initial coulombic efficiency.

It can also be seen from Table 1 that in Comparative Examples 1 to 3, 5, and 6 in which a functional layer was formed using a composition for a functional layer containing an organic particle dispersion liquid in which either or both of (i) the polymerization initiator decomposition product content and (ii) the total polymerization initiator decomposition product and unreacted polyfunctional monomer content were outside of specific ranges, an obtained secondary battery had poor initial coulombic efficiency. It can also be seen from Table 1 that in Comparative Example 4 in which a functional layer was formed using a composition for a functional layer containing an organic particle dispersion liquid that did not contain organic particles including a polyfunctional monomer unit in a proportion of 50 mass% or more, it was not possible to form a functional layer having excellent heat resistance.

INDUSTRIAL APPLICABILITY

According to the present disclosure, it is possible to provide an organic particle dispersion liquid for a secondary battery functional layer and a composition for a secondary battery functional layer containing the same with which it is possible to form a functional layer that has excellent heat shrinkage resistance and can cause a secondary battery to display excellent initial coulombic efficiency.

Moreover, according to the present disclosure, it is possible to provide a battery member for a secondary battery that has excellent heat shrinkage resistance and can cause a secondary battery to display excellent initial coulombic efficiency.

Furthermore, according to the present disclosure, it is possible to provide a secondary battery that has excellent stability and initial coulombic efficiency.

**Claims**

1. An organic particle dispersion liquid for a secondary battery functional layer comprising organic particles and a solvent, wherein

the organic particles include a polyfunctional monomer unit in a proportion of 50 mass% or more, and polymerization initiator decomposition product content in the organic particle dispersion liquid for a secondary battery functional layer is 50 ppm or less, and total polymerization initiator decomposition product and unreacted polyfunctional monomer content in the organic particle dispersion liquid for a secondary battery functional layer is 500 ppm or less.

2. The organic particle dispersion liquid for a secondary battery functional layer according to claim 1, wherein the organic particles have a volume-average particle diameter of not less than 50 nm and not more than 900 nm.

3. A composition for a secondary battery functional layer comprising: a binder; and the organic particle dispersion liquid for a secondary battery functional layer according to claim 1 or 2.

4. A battery member for a secondary battery comprising a functional layer for a secondary battery formed using the composition for a secondary battery functional layer according to claim 3.

5. A secondary battery comprising the battery member for a secondary battery according to claim 4.

## INTERNATIONAL SEARCH REPORT

| | International application No. |
|---|---|
| | PCT/JP2021/011769 |

A. CLASSIFICATION OF SUBJECT MATTER
Int. Cl. H01M50/449(2021.01)i, H01M50/443(2021.01)i
FI: H01M50/449, H01M50/443 E

According to International Patent Classification (IPC) or to both national classification and IPC

B. FIELDS SEARCHED

Minimum documentation searched (classification system followed by classification symbols)
Int. Cl. H01M50/449, H01M50/443

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2019/065370 A1 (NIPPON ZEON CO., LTD.) 04 April 2019, claims, paragraph [0084] | 1-5 |
| A | JP 2008-185983 A (NIPPON ZEON CO., LTD.) 14 August 2008 | 1-5 |
| A | JP 2008-111067 A (SEKISUI CHEMICAL CO., LTD.) 15 May 2008 | 1-5 |
| A | JP 8-30023 A (SANYO CHEMICAL INDUSTRIES, LTD.) 02 February 1996 | 1-5 |
| A | JP 3-87840 A (CANON INC.) 12 April 1991 | 1-5 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12.05.2021 | 25.05.2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2021/011769

| Patent Documents referred to in the Report | Publication Date | Patent Family | Publication Date |
|---|---|---|---|
| WO 2019/065370 A1 | 04.04.2019 | CN 111095604 A<br>KR 10-2020-0060369 A | |
| JP 2008-185983 A | 14.08.2008 | (Family: none) | |
| JP 2008-111067 A | 15.05.2008 | (Family: none) | |
| JP 8-30023 A | 02.02.1996 | (Family: none) | |
| JP 3-87840 A | 12.04.1991 | (Family: none) | |

Form PCT/ISA/210 (patent family annex) (January 2015)

**EP 4 131 621 A1**

**REFERENCES CITED IN THE DESCRIPTION**

**Patent documents cited in the description**

- WO 2019065416 A1
- JP 6052174 B
- JP 5488857 B
- JP 2016219358 A
- JP 2017103034 A